# EUROPEAN PATENT SPECIFICATION

(11) **EP 1 728 231 B1**
(45) Date of publication and mention of the grant of the patent: **07.01.2009**
(21) Application number: 05708964.1
(22) Date of filing: 07.03.2005
(51) Int. Cl.: G09F 9/30, G02F 1/1339, G08G 1/09, A41D 13/01

(54) **DISPLAY PANEL**
ANZEIGETAFEL
PANNEAU D'AFFICHAGE

(30) Priority: 17.03.2004 EP 04101094
(43) Date of publication of application: 06.12.2006
(73) Proprietor: Koninklijke Philips Electronics N.V., 5621 BA Eindhoven (NL)
(72) Inventor: VAN DAM, Dirkjan, B., NL-5656 AA Eindhoven (NL); VERSTEGEN, Emile, J., K., NL-5656 AA Eindhoven (NL)
(74) Representative: Damen, Daniel Martijn
(86) International application number: PCT/IB2005/050835
(87) International publication number: WO 2005/091257

(56) References cited:
- EP-A- 1 048 972
- WO-A-00/26887
- US-A1- 2003 213 045
- PATENT ABSTRACTS OF JAPAN vol. 2000, no. 20, 10 July 2001 (2001-07-10) & JP 2001 066612 A (NEC KAGOSHIMA LTD), 16 March 2001 (2001-03-16)

## Description

### FIELD OF THE INVENTION

The present invention relates to a display panel comprising a first substrate and a second substrate being separated from each other by spacers.

The present invention further relates to a method of manufacturing a display panel.

### BACKGROUND OF THE INVENTION

Display panels, e.g. display panels of the Liquid Crystal Display type (LCD-displays), are commonly used as computer displays, TV screens etc. An LCD-display has a first substrate and a second substrate confining between them a liquid crystalline material. Each of the substrates is provided with electrodes arranged to form pixels. By controlling the voltage supplied to the electrodes it is possible to control the orientation of the liquid crystals and thus control the light transmittance through the pixels of the display panel.

In recent time it has become more interesting to use displays in new applications and in other environments than the traditional office or living room environments. US 6,507,385 to Nishiyama et al discloses an LCD-display having a reduced sensitivity to varying ambient temperatures. The display panel disclosed by Nishiyama is, however, not very suitable for applications where the display panel is to be put on a articles of clothing or for outdoor use.

WO 00/26887 discloses a panel provided with a multiplicity of spaced apertures to reduce the wind effect on the panel.

### SUMMARY OF THE INVENTION

An object of the present invention is to provide a display panel which decreases or eliminates the drawbacks of the prior art display panels and thus to provide a display panel which is suitable for different kinds of environmental conditions. This object is achieved with a display panel comprising a first substrate and a second substrate being separated from each other by spacers and sealing between them a space, at least one of the spacers being penetrated by a hole extending therethrough and through both of the substrates to form a through hole through the display panel, said at least one of the spacers and the substrates forming the wall of said through hole and sealing the space from the through hole.

The display panel according to the invention has the advantage that it is permeable to gases and/or liquids. Thus it could be applied to an article of clothing, such as a shirt or a sweater. Since the display panel is permeable to gases the panel will not cause, or at least reduce, problems of sweating for the user. In other applications, such as road signs, advertising signs etc. the display panel will reduce the amount of wind caught be panel, reduce the amount of water collected on the panel and/or make washing easier.

An advantage with the measure according to claim 2 is that the image displayed on the display panel is not distorted by the spacers and/or the through holes when each spacer having a trough hole is located outside the pixel area.

An advantage of the measure according to claim 3 is that the permeability to gases and/or liquids of the display panel is evenly distributed over the surface of the panel when the through holes are distributed over the surface of the display panel. This has particular advantages in cases were the gas and/or liquid that is to permeate the display panel is emitted from a surface, such as is the case with sweat emitted from a human body. Also in cases of reducing the amount of wind caught by the display panel it is an advantage that the through holes are evenly distributed over the surface of the panel.

An advantage of the measure according to claim 4 is that the display panel will become more attractive and that the through holes are turned into a design element. The spacers could be made of a colored or fluorescent material to obtain decorative effects.

An advantage of the measure according to claim 6 is that a flexible or bendable display panel is suitable for application to a surface which is not completely plane or which could be expected to change shape during use, such as is the case with a display panel attached to a wearable product, such as a piece of clothing.

An advantage of the measure according to claim 8 is that the display panel is particularly suitable for integrating in wearable products since problems related to the "breathing" of the wearable product is avoided, or at least decreased, by the holes extending through the display panel.

An other object of the present invention is to provide a method of making a display panel which decreases or eliminates the drawbacks of the prior art display panels and thus to provide a method of manufacturing a display panel which is suitable for different kinds of environmental conditions. This object is achieved with a method of manufacturing a display panel, the method comprising the steps of
providing spacers on one side of a first substrate,
providing a second substrate on said one side of the first substrate such that the spacers hold the first and the second substrates separated from each other,
forming a hole through at least one of the spacers and both of the substrates such that said at least one of the spacers and the substrates form the wall of the through hole, and
sealing a space between the substrates and the spacers.

An advantage with this method is that it provides an efficient way of manufacturing display panels that are permeable to gases and/or liquids.

An advantage of the measure according to claim 10 is that the through holes can be made with a higher precision and also in very small sized spacers if they are made after the two substrates have been put together. In particular the forming of the through hole through the substrates and the spacer in one single moment provides for low costs of manufacturing and high accuracy of the through holes.

An advantage of the measure according to claim 11 is that the liquid crystalline material is not subjected to any heat and mechanical strains that may occur during the step of forming the through hole or holes.

An advantage of the measure according to claim 12 is that, in cases where the through holes are formed by drilling or another dust generating method, the contamination of the liquid crystal material by dust is avoided by sealing the liquid crystal material between the substrates before forming the through hole.

An advantage of the measure according to claim 13 is that the methods mentioned are efficient in forming through holes without causing damage to the spacer and/or the substrates. In particular it is important that the spacer, after forming the through hole, forms unbroken walls of the through hole such that the space is properly sealed from the environment to avoid that liquid crystalline material or gas leaks out from the display panel or that air enters the space as the case may be for the display panel type in question.

An advantage of the measure according to claim 14 is that the efficient forming of very small spacers are enabled. For a display panel that is to display rather small objects, i.e. a display panel in the same dimension as a lap top computer display, and which is permeable to gases the spacers must be small not to interfere with the image that is to be displayed. By forming the spacers by ink jet printing it is possible to control the location of the spacers, which is an advantage when the spacers, preferably in a subsequent step, are to the perforated to form through holes.

An advantage of the measure according to claim 15 is that the forming of small spacers with defined positions on a substrate in one sequence is enabled. As mentioned above, the defined location of the spacers is an advantage when forming through holes in the spacers.

These and other aspects of the invention will be apparent from and elucidated with reference to the embodiments described hereafter.

### BRIEF DESCRIPTION OF THE DRAWINGS

The invention will now be described in more detail and with reference to the appended drawings in which:
Fig. 1 is a cross section and shows a part of a display panel according to a first embodiment of the invention.
Fig. 2 is a schematic cross section and shows seven steps in a first method of manufacturing a display panel according to the invention.
Fig. 3 is a schematic cross section and shows three steps in a second method of manufacturing a display panel according to the invention.
Fig. 4 is a three dimensional view and shows a display panel according to a second embodiment of the invention.

### DESCRIPTION OF PREFERRED EMBODIMENTS

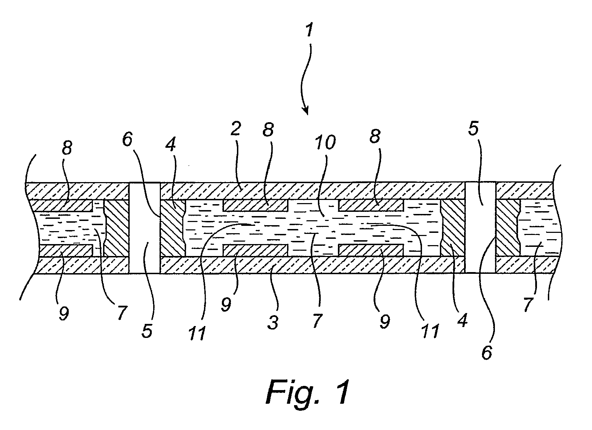

Fig. 1 is a schematic section view of a display panel 1 according to a first embodiment of the invention. The display panel 1 has a first substrate 2, which is made from a light-transmissive glass plate, and a second substrate 3, which may also be made of a light-transmissive glass plate. The two substrates 2, 3 are separated from each other by means of a plurality of spacers, of which two spacers 4 are shown in Fig. 1. The spacers 4 are attached to both substrates 2, 3 in a manner that will be described in further detail below. A through hole 5 has been formed in each spacer 4. The through hole 5 extends through both substrates 2, 3 and through the center of the respective spacer 4. Each through hole 5 has a circumferential inner wall 6 which is formed by the substrates 2, 3 and the spacer 4. The wall 6 seals the through hole 5 from a space 7 formed between the substrates 2, 3.

The spacer 4, which could be made of an acrylic polymer material or another suitable material, could be provided with a color pigment or a fluorescent pigment to provide an attractive visual appearance of the display panel 1.

The first substrate 2 is provided with a first set of light-transmissive electrodes 8, which could made from ITO (Indium Tin Oxide) or another suitable material. The second substrate 3 is provided with a second set of light-transmissive electrodes 9, which also could be made of ITO. The space 7 between the electrodes is filled with a liquid crystalline material 10, based on the twisted nematic (TN), the supertwisted nematic (STN) or the ferroelectric effect so as to modulate the direction of polarization of incident light. The sets of electrodes 8, 9 define between them a matrix of pixels 11. By controlling the voltage over each pixel 11 it is possible to display a desired image on the display panel 1.

As is indicated in Fig. 1 the spacers 4 are located besides the pixels 11 and the sets of electrodes 8, 9. Thus the through holes 5 will not interfere or deteriorate the image displayed by the display panel 1. It should also be noted that the wall 6 of the through hole 5 forms a sealing preventing any liquid crystalline material 10 from the escaping the space 7.

The display panel 1 shown in Fig. 1 could be used in road sign and advertising applications. The through holes 5, which could have a diameter of typically 0,2 to 5 mm, provides liquid drainage for the display panel, decreases the amount of wind caught by the display panel and makes cleaning easier.

It is understood that the display panel 1 additionally could be provided with control means, one or more polarizers, light sources and other devices, that are not shown in Fig. 1, as is well known to the person skilled in the art.

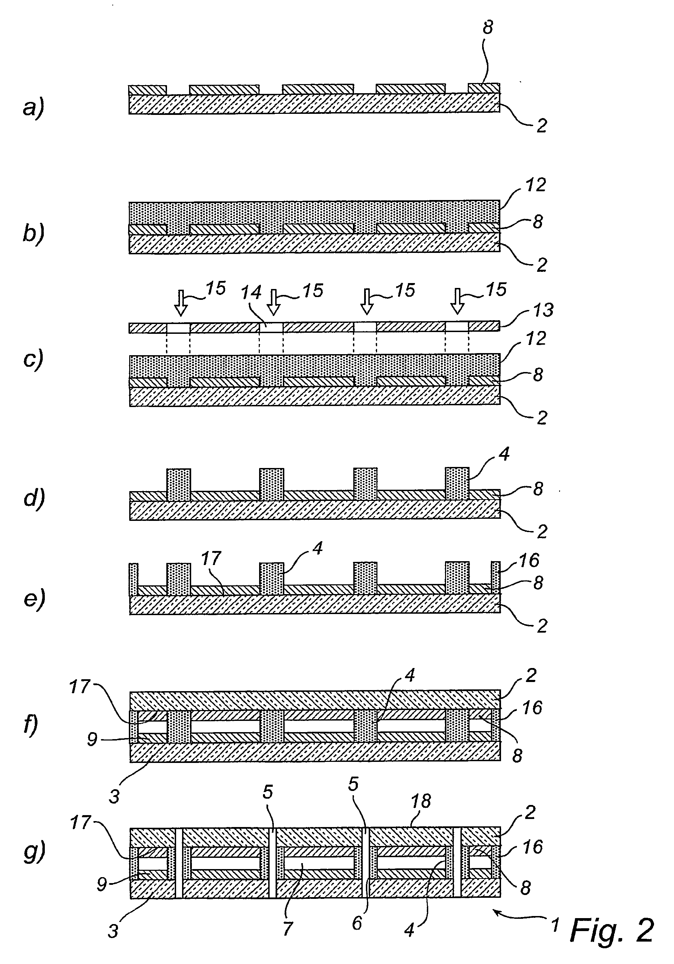

Fig. 2 illustrates a first method of manufacturing a display panel according to the invention. The first method includes so called photolithography for forming the spacers 4. In step (a) a set of light-transmissive electrodes 8 are provided on the first substrate 2. In step (b) a photosensitive polymer film 12, which could be an acryl-based negative resist, is provided on the first substrate 2. Then, in step (c), a mask 13 having e.g. circular holes 14 is held above the film 12 at the same time as the film 12 is exposed to UV-radiation, represented by arrows 15. The UV radiation cures those parts of the film 12 that are exposed to the UV-radiation. After exposure to UV-radiation those parts of the film 12 that were shadowed by the mask 13 can, in step (d) be washed away by means of a suitable fluid leaving only the spacers 4 on the substrate 2. In step (e) a sealing strip 16 is attached to the first substrate 2 around its circumference. The first substrate 2 having the spacers 4 attached to one side 17 thereof is then, in step (f), put on the second substrate 3, having provided thereon the second set of electrodes 9, in such a way that the side 17 of the first substrate 2 faces the second substrate 3. A thin layer of glue has been provided on the top of each spacer 4 to assure a secure attachment to the second substrate 3.

Finally, in step (g), through holes 5 are drilled through each spacer 4 and the substrates 2, 3. The through holes 5 may be made by stamping, mechanical drilling, laser drilling, powder blasting, water jetting or any other method suitable for making through holes in the substrates 2, 3 and the spacers 4. The through holes 5 preferably extend in a direction being substantially perpendicular to the substrates 2, 3, i.e. perpendicular to a viewing surface 18, being the surface on which the displayed image is to be viewed, of the thus formed display panel 1. It will be appreciated that each through hole 5 is preferably made in the center of the respective spacer 4 such that the wall 6 of the hole 5 will provide proper sealing of the space 7 formed between the substrates 2, 3 from the surroundings. Thus the contact area between the respective spacer 4 and the first substrate 2 and the contact area between the respective spacer 4 and the second substrate 3, before forming the hole 5, both need to be larger than the area of the hole 5 to provide proper sealing of the hole 5 from the space 7. After forming the through holes 5 a liquid crystalline material (not shown in Fig. 2) is added to the space 7 formed between the substrates 2, 3 and the display panel 1 is ready for use.

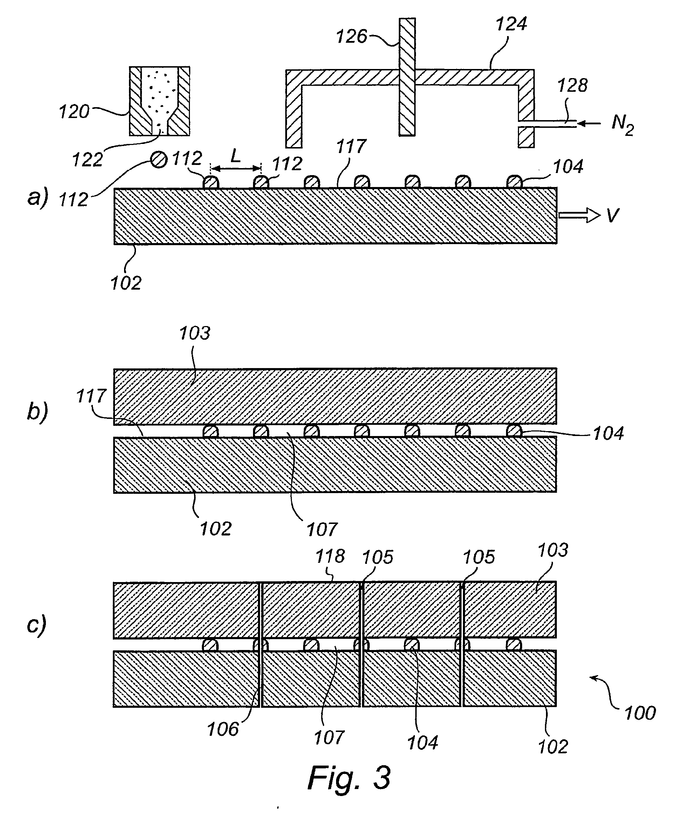

Fig. 3 illustrates a second method of forming a flexible display panel according the invention. This second method comprises ink jet printing spacers on a substrate. In step (a) a first plastic substrate 102 is moved horizontally at a continuous speed, indicated by the arrow V, under a piezo inkjet pump 120 having a nozzle 122. The nozzle 122 ejects, at predetermined time intervals, drops of acrylic material, indicated by a drop 112, on one side 117 of the first substrate 102. The drops 112 will land on and attach to the first substrate 102 at mutual distances L depending on the speed V of the first substrate 102 and the frequency at which the nozzle 122 ejects the drops 112. The drops 112 will then pass under a UV curing hood 124. The hood 124 is equipped with a UV lamp 126 and a pipe 128 for supplying an inert gas, such as nitrogen, N₂, to the hood 124. When passing under the hood 124 the drops 112 become cured to form spacers 104. The spacers 104 are then provided with a suitable glue on their top portions. In step (b) a second plastic substrate 103 is put on top of the first substrate 102 in such a manner that the side 117, having the spacers 104 attached thereto, of the first substrate 102 faces the second substrate 103 and that the spacers 104 are securely attached to the second substrate 103. Due to the spacers 104 separating the substrates 102, 103 from each other a space 107 is formed between the two substrates 102, 103. In step (c) through holes 105 are formed through some of the spacers 104 and the substrates 102, 103. The through holes 105 could be formed with the help of laser drilling or a similar method and are preferably perpendicular to a viewing surface 118. In each through hole 105 the substrates 102, 103 and the respective spacer 104 form the wall 106 of the through hole 105 such that there is no contact between the space 107 and the through hole 105. The space 107 is then filled with a liquid crystalline material (not shown in Fig 3) to form a display panel 100, which is flexible and suitable for the attachment to a piece of clothing. It will be appreciated that the material dropped on the substrate to form the spacers could be any suitable type of monomers, polymers, reactive polymers or a mixture of two or three of these components.

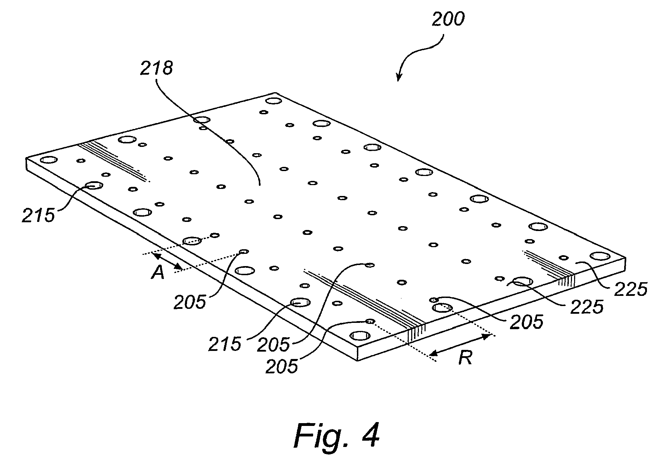

Fig. 4 indicates a second embodiment of the invention in the form of a flexible display panel 200 adapted to be integrated in a wearable product, such as in a piece of clothing, such as a sweater. The display panel 200 could be made in accordance with one of the methods described above. Thus the display panel 200 has first through holes 205 and second through holes 215. The first through holes 205, each of which extend through a spacer and two plastic substrates, and thus through the display panel 200, in a manner similar to what has been described with reference to Fig. 1 above, have a diameter of about 10 micrometers. As is indicated in Fig. 4 the through holes 205 form a number of rows 225 of through holes 205, the distance R between two adjacent rows 225 being about 0,3 mm. The distance A between the individual through holes 205 of each row 225 is also about 0,3 mm. As is indicated in Fig. 4 the first through holes 205 are substantially evenly distributed over a viewing surface 218 of the display panel 200, the viewing surface 218 being the surface of the display panel 200 that is intended to face a person watching what is displayed on the display panel 200. The main purpose of the first through holes 205 is to make the display panel 200 permeable such that sweat in vapor form may be transferred through the display panel 200 via the through holes 205. Thus a person wearing a sweater having the display panel 200 attached thereto will not feel any discomfort.

The second through holes 215 are located around the periphery of the display panel 200. The second through holes 215, which may also be formed according to one of the methods described above and each of which extend through a respective spacer and two substrates, have a diameter of about 1 mm. The purpose of the second through holes 215 is to form holes for a thread that is used for sewing the display panel 200 on the sweater.

It will be appreciated that numerous modifications of the embodiments described above are possible within the scope of the appended claims.

Thus, for example, the diameter of the through holes could be varied in accordance with the application of the display panel. Thus display panels intended for use on pieces of clothing could be provided with through holes having a diameter of about 1-500 micrometers for the purpose of allowing sweat in the form of vapor to permeate through the display panel. Display panels used as road signs or advertising signs could be provided with through holes having a diameter of about 0,5-50 mm for the purpose of providing drainage of water, making cleaning easier and reducing the amount of wind caught by the display panel.

Above it is described that the through holes are formed after the second substrate has been attached to the spacers attached to the first substrate. It is of course also possible to form holes in the substrates and in the spacers before they are put together and put them together in such a manner that the holes of the first and second substrates are aligned with the holes in the spacers such that through holes having sealed walls are formed after assembly of the spacers and substrates. However, in particular when forming very small through holes, such as through holes with a diameter of less than about 0,5 mm, it is an advantage to attach the substrates to the spacer first and then form the through holes through the substrates and the respective spacer in one operation to ensure a proper alignment of the through holes through the spacers.

With reference to Fig. 2 it is described above how through holes 5 are formed through the spacers 4 and the substrates 2, 3. In addition to this it is also possible to form similar though holes through the sealing strip 16 and the substrates 2, 3. In particular in cases where the sealing strip 16 is relatively thick through holes similar to the second through holes 215, described above with reference to Fig. 4, could be formed through the sealing strip 16 and the substrates 2, 3. Such through holes through the sealing strip 16 could be made with the purpose of forming holes for sewing the display panel to a piece of clothing.

In an alternative embodiment of the method described with reference to Fig. 3 the UV lamp 126 is instead placed under the first substrate 102 and illuminates the drops 112 of acrylic material from below via the first substrate 102. The curing by the UV lamp 126 is controlled in such a way that the drops 112 are cured at their interface with the first substrate 102 but remain uncured and sticky at their top portions. When the second substrate 103 is put on top of the first substrate 102 the drops 112 will thus stick to the second substrate 103. In a second curing step the drops 112 will then be cured completely and ensure the firm attachment of the substrates 102, 103 without the need for any glue.

As indicated above different materials may be used both for the spacers and for the substrates. Thus the substrates may be made of glass or even steel in the case of rigid display panels and could be made of plastic materials in the case a flexible display panel is desired.

The embodiments described above refer to liquid crystal display panels. The invention is however also applicable for other display panels where a permeation of gases or liquids through the display panel is desired and where it is required to seal a space, which may be filled with liquid crystal material, or a noble gas, or is evacuated, from the surroundings. Examples of such displays are the above mentioned liquid crystal displays, field emission displays, electro-wetting displays, foil displays, polyled displays, fluorescent displays, touch screen or pressure-sensitive displays, and other types of display panels.

Above it is described that the through holes have a circular cross section. It will be appreciated that the through holes could have other cross sections, such as square and oval cross section. It is also possible to form through holes having the cross section of an elongated slot.

To summarize a display panel 1 has a first substrate 2 and a second substrate 3. The substrates 2, 3 are provided with electrodes 8, 9 and are separated from each other by a plurality of spacers 4. Holes 5 extend through the spacers 4 and the substrates 2, 3 and thus form through holes 5 extending through the display panel 1 making it permeable to gases and/or liquids. The substrates 2, 3 and the spacer 4 form the wall 6 of the respective through hole 5 and thus a space 7 can be sealed between the two substrates 2, 3 without any risk of leakage.

The invention is not restricted to the described embodiments. It can be altered in different ways within the scope of the appended claims.

## Claims

1. A display panel comprising a first substrate (2; 102) and a second substrate (3; 103) being separated from each other by spacers (4; 104) and sealing between them a space (7) **characterized in that** at least one of the spacers (4; 104) being penetrated by a hole extending therethrough and through both of the substrates (2, 3; 102, 103) to form a through hole (5; 105; 205; 215) through the display panel (1; 100; 200), said at least one of the spacers (4; 104) and the substrates (2, 3; 102, 103) forming the wall (6; 106) of said through hole (5; 105) and sealing the space (7) from the through hole (5; 105).

2. A display panel according to claim 1, in which each spacer (4) having a through hole (5) is located outside the pixel areas (11) of the display panel (1).

3. A display panel according to claim 1 or 2, in which a plurality of through holes (5; 205), each extending through a respective one of the spacers (4) and through both of the substrates (2, 3) to form a through hole (5; 205) through the display panel (1; 200), are distributed over the surface (218) of the display panel (1; 200).

4. A display panel according to any one of claims 1-3, in which the spacers (4; 104) are made of a visually decorative material.

5. A display panel according to any one of claims 1-4, in which the display panel is an LCD-display (1; 100; 200), a foil display, an electro-wetting display, a polyled display, a fluorescent display, or a touch screen or pressure-sensitive display.

6. A display panel according to any one of claims 1-5, in which the display panel (100; 200) is flexible or bendable and/or has flexible substrates.

7. A display panel according to any one of claims 1-6, in which the display panel (100) has a plastic (102, 103) or steel substrate.

8. A display panel according to any one of claims 1-7, in which the display panel (200) is adapted to be integrated in a wearable product.

9. A method of manufacturing a display panel, comprising the steps of
providing spacers (4; 104) on one side (17; 117) of a first substrate (2; 102),
providing a second substrate (3; 103) on said one side (17; 117) of the first substrate (2; 102) such that the spacers (4; 104) hold the first and the second substrates (2, 3; 102, 103) separated from each other,
**characterized by** forming a hole (5; 105) through at least one of the spacers (4; 104) and both of the substrates (2, 3; 102, 103) such that said at least one of the spacers (4; 104) and the substrates (2, 3; 102, 103) form the wall (6; 106) of the through hole (5; 105), and
sealing a space (7; 107) between the substrates (2, 3; 102, 103) and the spacers (4; 104).

10. A method according to claim 9, in which said through hole (5; 105) is formed after the step of providing the second substrate (3; 103) on said one side (17; 117) of the first substrate (2; 102).

11. A method according to claim 9, in which a liquid crystalline material (10) is sealed between the substrates (2, 3; 102, 103) and the spacers (4; 104) after the step of forming said through hole (5; 105).

12. A method according to claim 9, in which a liquid crystalline material (10) is sealed between the substrates (2, 3; 102, 103) and the spacers (4; 104) before the step of forming said through hole (5; 105).

13. A method according to claim 9, in which said through hole (5; 105) is formed by a method chosen among stamping, mechanical drilling, laser drilling, powder blasting and water jetting.

14. A method according to any one of claims 9-13, in which the spacers (104) are made by ink jet printing monomers, polymers, reactive polymers or a mixture of two or three of these components (112) on the first substrate (102) followed by one or more curing steps.

15. A method according to any one of claims 9-13, in which the spacers (4) are made by forming a photosensitive film (12) on the first substrate (2) followed by illumination and removal of those parts of the film (12) surrounding those parts that are to become the spacers (4).

## Patentansprüche

1. Anzeigetafel mit einem ersten Substrat (2; 102) und einem zweiten Substrat (3; 103), wobei diese durch Abstandshalter (4; 104) voneinander beabstandet sind und zwischen diesen einen Raum (7) einschließen, **dadurch gekennzeichnet, dass** mindestens einer der Abstandshalter (4; 104) von einem Loch durchdrungen wird, welches sich durch diesen und durch beide der Substrate (2, 3; 102, 103) erstreckt, um ein Durchgangsloch (5; 105; 205; 215) durch die Anzeigetafel (1; 100; 200) zu bilden, wobei der mindestens eine der Abstandshalter (4; 104) und die Substrate (2, 3; 102, 103) die Wand (6; 106) des Durchgangslochs (5; 105) bilden und den Raum (7) von dem Durchgangsloch (5; 105) einschließen.

2. Anzeigetafel nach Anspruch 1, wobei jeder Abstandshalter (4) mit einem Durchgangsloch (5) außerhalb der Pixelflächen (11) der Anzeigetafel (1) platziert ist.

3. Anzeigetafel nach Anspruch 1 oder 2, wobei eine große Anzahl von Durchgangslöchern (5; 205), welche sich jeweils durch einen jeweiligen Abstandshalter (4) und durch beide Substrate (2, 3) erstrecken, um ein Durchgangsloch (5; 205) durch die Anzeigetafel (1; 200) zu bilden, über die Oberfläche (218) der Anzeigetafel (1; 200) verteilt ist.

4. Anzeigetafel nach einem der Ansprüche 1 bis 3, wobei die Abstandhalter (4; 104) aus einem visuell dekorativen Material vorgesehen werden.

5. Anzeigetafel nach einem der Ansprüche 1 bis 4, wobei die Anzeigetafel eine LCD-Anzeige (1; 100; 200), eine Folienanzeige, eine Electrowetting-(Elektrobenetzungs-) Anzeige, eine PolyLED-Anzeige, eine Fluoreszenzanzeige, eine Touchscreen-Anzeige oder eine druckempfindliche Anzeige ist.

6. Anzeigetafel nach einem der Ansprüche 1 bis 5, wobei die Anzeigetafel (100; 200) flexibel oder biegbar ist und/oder flexible Substrate aufweist.

7. Anzeigetafel nach einem der Ansprüche 1 bis 6, wobei die Anzeigetafel (100) ein Kunststoff- (102, 103) oder Stahlsubstrat aufweist.

8. Anzeigetafel nach einem der Ansprüche 1 bis 7, wobei die Anzeigetafel (200) so eingerichtet ist, dass sie in ein abnutzungsbeständiges Produkt integriert wird.

9. Verfahren zur Herstellung einer Anzeigetafel, welches die Schritte des
- Vorsehens von Abstandshaltern (4; 104) auf einer Seite (17; 117) eines ersten Substrats (2; 102) sowie
- Vorsehens eines zweiten Substrats (3; 103) auf der einen Seite (17; 117) des ersten Substrats (2; 102), so dass die Abstandshalter (4; 104) das erste und das zweite Substrat (2, 3; 102, 103), die voneinander beabstandet sind, halten,
umfasst, **gekennzeichnet durch**
- Ausbilden eines Lochs (5; 105) **durch** mindestens einen der Abstandshalter (4; 104) und beide der Substrate (2, 3; 102, 103), so dass der mindestens eine der Abstandshalter (4; 104) und die Substrate (2, 3; 102, 103) die Wand (6; 106) des Durchgangslochs (5; 105) bilden, sowie
- Einschließen eines Raums (7; 107) zwischen den Substraten (2, 3; 102, 103) und den Abstandshaltern.

10. Verfahren nach Anspruch 9, wobei das Durchgangsloch (5; 105) nach dem Schritt des Vorsehens des zweiten Substrats (3; 103) auf der einen Seite (17; 117) des ersten Substrats (2; 102) ausgebildet wird.

11. Verfahren nach Anspruch 9, wobei ein flüssiges, kristallines Material (10) zwischen den Substraten (2, 3; 102, 103) und den Abstandshaltern (4; 104) nach dem Schritt des Ausbildens des Durchgangslochs (5; 105) eingeschlossen wird.

12. Verfahren nach Anspruch 9, wobei ein flüssiges, kristallines Material (10) zwischen den Substraten (2, 3; 102, 103) und den Abstandshaltern (4; 104) vor dem Schritt des Ausbildens des Durchgangslochs (5; 105) eingeschlossen wird.

13. Verfahren nach Anspruch 9, wobei das Durchgangsloch (5; 105) durch ein unter Stanzen, mechanischem Bohren, Laserbohren, Mikrosandstrahlen und Wasserstrahlen ausgewähltes Verfahren ausgebildet wird.

14. Verfahren nach einem der Ansprüche 9 bis 13, wobei die Abstandshalter (104) durch Tintenstrahldrucken von Monomeren, Polymeren, reaktiven Polymeren oder einer Mischung aus zwei oder drei dieser Komponenten (112) auf dem ersten Substrat (102), gefolgt von einem oder mehreren Härtungsschritten, vorgesehen werden.

15. Verfahren nach einem der Ansprüche 9 bis 13, wobei die Abstandshalter (4) durch Ausbilden eines photoempfindlichen Films (12) auf dem ersten Substrat (2), gefolgt von einer Belichtung und Entfernung der Teile des Films (12), welche die Teile umgeben, die die Abstandshalter (4) werden sollen, vorgesehen werden.

## Revendications

1. Panneau d'affichage comprenant un premier substrat (2 ; 102) et un deuxième substrat (3 ; 103) l'un étant séparé de l'autre par des entretoises (4 ; 104) et scellant entre eux un espace (7), **caractérisé en ce qu'**au moins une des entretoises (4 ; 104) est pénétrée par un trou qui s'étend à travers celle-ci et à travers les deux substrats (2, 3 ; 102, 103) de manière à former un trou de traversée (5 ; 105 ; 205 ; 215) à travers le panneau d'affichage (1 ; 100 ; 200), ladite au moins une des entretoises (4 ; 104) et les substrats (2, 3 ; 102 ; 103) constituant la paroi (6 ; 106) dudit trou de traversée (5 ; 105) et scellant l'espace (7) du trou de traversée (5 ; 105).

2. Panneau d'affichage selon la revendication 1, dans lequel chaque entretoise (4) ayant un trou de traversée (5) se situe à l'extérieur des zones de pixels (11) du panneau d'affichage (1).

3. Panneau d'affichage selon la revendication 1 ou 2, dans lequel une pluralité de trous de traversée (5 ; 205), chacun s'étendant à travers une entretoise respective des entretoises (4) et à travers les deux substrats (2, 3) de manière à former un trou de traversée (5 ; 205) à travers le panneau d'affichage (1 ; 200), sont répartis sur la surface (218) du panneau d'affichage (1 ; 200).

4. Panneau d'affichage selon l'une quelconque des revendications précédentes 1 à 3, dans lequel les entretoises (4 ; 104) sont fabriquées à partir d'un matériau visuellement décoratif.

5. Panneau d'affichage selon l'une quelconque des revendications précédentes 1 à 4, dans lequel le panneau d'affichage est un affichage à cristaux liquides (1 ; 100 ; 200), un affichage de feuilles, un affichage d'électro-mouillage, un affichage de polyled, un affichage fluorescent ou un écran tactile ou un affichage sensible à la pression.

6. Panneau d'affichage selon l'une quelconque des revendications précédentes 1 à 5, dans lequel le panneau d'affichage (100 ; 200) est flexible ou pliable et/ou présente des substrats flexibles.

7. Panneau d'affichage selon l'une quelconque des revendications précédentes 1 à 6, dans lequel le panneau d'affichage (100) présente un substrat en matière plastique ou un substrat en acier (102, 103).

8. Panneau d'affichage selon l'une quelconque des revendications précédentes 1 à 7, dans lequel le panneau d'affichage (200) est adapté de manière à être intégré dans un produit portable.

9. Procédé de fabrication d'un panneau d'affichage, comprenant les étapes suivantes consistant à :
appliquer des entretoises (4 ; 104) d'un côté (17 ; 117) d'un premier substrat (2 ; 102),
appliquer un deuxième substrat (3 ; 103) dudit un côté (17 ; 117) du premier substrat (2 ; 102) de telle façon que les entretoises (4 ; 104) maintiennent les premiers et les deuxièmes substrats (2, 3 ; 102, 103) séparés les uns des autres,
**caractérisé par** les étapes suivantes consistant à :
former un trou (5 ; 105) à travers au moins une des entretoises (4 ; 104) et à travers les deux substrats (2, 3 ; 102, 103) de telle façon que ladite au moins une des entretoises (4 ; 104) et les substrats (2, 3 ; 102, 103) constituent la paroi (6 ; 106) du trou de traversée (5 ; 105) et
sceller un espace (7 ; 107) entre les substrats (2, 3 ; 102, 103) et entre les entretoises (4 ; 104).

10. Procédé selon la revendication 9, dans lequel ledit trou de traversée (5 ; 105) est formé après l'étape suivante consistant à appliquer le deuxième substrat (3 ; 103) dudit un côté (17 ; 117) du premier substrat (2 ; 102).

11. Procédé selon la revendication 9, dans lequel un matériau à cristaux liquides (10) est scellé entre les substrats (2, 3 ; 102, 103) et les entretoises (4 ; 104) après l'étape suivante consistant à former ledit trou de traversée (5 ; 105).

12. Procédé selon la revendication 9, dans lequel un matériau à cristaux liquides (10) est scellé entre les substrats (2, 3 ; 102, 103) et les entretoises (4 ; 104) avant l'étape suivante consistant à former ledit trou de traversée (5 ; 105).

13. Procédé selon la revendication 9, dans lequel ledit trou de traversée (5 ; 105) est formé par un procédé qui est choisi parmi l'estampage, le perçage mécanique, le perçage au laser, le traitement au j et de poudre et le traitement au j et d'eau.

14. Procédé selon l'une quelconque des revendications précédentes 9 à 13, dans lequel les entretoises (104) font fabriquées par l'impression à jet d'encre de monomères, de polymères, de polymères réactifs ou d'un mélange constitué de deux ou de trois de ces composants (112) sur le premier substrat (102), ce qui est suivi d'une ou de plusieurs étapes de durcissement.

15. Procédé selon l'une quelconque des revendications précédentes 9 à 13, dans lequel les entretoises (4) sont fabriquées par la formation d'un film photosensible (12) sur le premier substrat (2), ce qui est suivi de l'illumination et de l'enlèvement de ces parties du film (12) entourant ces parties qui doivent devenir les entretoises (4).
